## Europäisches Patentamt

(19) **European Patent Office**

**Office européen des brevets**

(11) Publication number: **0 124 988**

**B1**

(12) **EUROPEAN PATENT SPECIFICATION**

(45) Date of publication of patent specification: **31.10.90**

(51) Int. Cl.⁵: **C 10 G 3/00**

(21) Application number: **84302028.0**

(22) Date of filing: **27.03.84**

(54) **Process for converting methanol into gasoline.**

(30) Priority: **13.04.83 US 484656**

(43) Date of publication of application:
**14.11.84 Bulletin 84/46**

(45) Publication of the grant of the patent:
**31.10.90 Bulletin 90/44**

(84) Designated Contracting States:
**BE DE FR GB IT NL**

(56) References cited:
**DE-A-3 137 751**
**US-A-4 044 061**

(73) Proprietor: **MOBIL OIL CORPORATION**
**150 East 42nd Street**
**New York New York 10017 (US)**

(72) Inventor: **Fremuth, Dietmar Reno**
**70 East Peachtree Court**
**Mt. Laurel New Jersey 08054 (US)**
Inventor: **Rogers, Allen Edwin**
**P.O. Box 247**
**Wycombe Pennsylvania 18980 (US)**
Inventor: **Zahner, John Clarence**
**25 Hamilton Avenue**
**Princeton New Jersey 08540 (US)**

(74) Representative: **Cooper, John Anthony et al**
**Mobil Court 3 Clements Inn**
**London WC2A 2EB (GB)**

Courier Press, Leamington Spa, England.

**Description**

This invention relates to a process for converting methanol into gasoline.

The catalytic conversion of methanol into gasoline boiling-range components is a highly exothermic reaction releasing approximately 1750 kJ of heat per kg of methanol. This amount of heat release will result in an adiabatic temperature increase in the reactor of several hundred degrees for pure methanol feed. In an adiabatic catalyst bed reactor, this large temperature increase will result in high zeolite catalyst aging rates, and possibly cause thermal damage to the catalyst. Furthermore, such high temperatures could cause an undesirable product distribution to be obtained. Therefore, it is critical in the conversion of methanol into gasoline products to provide for sufficient heat removal or dissipation so that the maximum temperature encountered in any portion of the catalyst is below a predetermined limit.

A preferred temperature control technique involves passing the methanol feed to the zeolite catalyst in combination with a gaseous diluent. By using such a diluent, for example light hydrocarbon gases, $C_5$ and lower boiling materials in a proper dilution ratio, the temperature rise in the catalyst is readily controlled within practical limits. These light hydrocarbon gases are readily separated from the higher boiling gasoline components and can be recycled to the process.

Typical methanol-to-gasoline (MTG) processes using acid ZSM-5 type catalysts are described in U.S. Patents 3,998,899, 4,052,479, 4,138,440 and 4,304,951. The feedstock is usually a crude liquid containing a major amount of methanol, a minor amount of water and trace amounts of hydrogen, carbon oxides, lower hydrocarbons and dissolved inert gas. Since the reaction takes place in the vapor phase at elevated temperatures and pressures, a considerable amount of thermal energy must be transferred to the feedstock. In typical known systems, such as that described in "Synergy", Vol. 2, No. 1, pp. 5—11, 1982, published by Mooil Research & Development Corp., the methanol evaporation and superheating steps require large heat exchange sections and substantial pressurization of the fresh feedstock prior to mixing it with compressed recycle gas, a significant amount of which is required to prevent a temperature excursion in the bed of active HZSM-5 catalyst at a reaction temperature of about 355 to 370°C.

Complete failure of the recycle gas in a single conversion MTG reactor can lead to an adiabatic temperature rise of about 500°C. Due to high catalyst activity, unacceptable temperatures may be reached in the upper parts of the bed within minutes. Catalyst deactivation from the elevated temperatures tends to magnify the temperature excursion in the downstream portions of the bed.

Control of the ratio of feed to recycle gas can be employed to provide mixing of the gaseous reactant and diluent streams; however, failure of such a control system could result in dumping a deleterious amount of methanol vapor into the catalyst bed under potentially dangerous conditions. Although an emergency shut-down system could be employed to cut off the methanol and cool the overheated equipment with standby propane for example, normal operations would be suspended and capital cost increased. The possibility of an uncontrolled temperature excursion in an MTG reactor has therefore encouraged workers in this field to attempt to reduce the likelihood that methanol can reach the active catalyst in the absence of diluent. Considerable effort has also been directed towards developing improved heat transfer systems and techniques for improving the energy recovery for feedstock vaporization and preheating.

One recent proposal for improved utilization of the heat generated in the conversion of methanol into gasoline is that described in U.S. Patent 4,418,236. In that proposal, the methanol feed to the process is injected in at least three separate portions in liquid form into the stream of recycle gas; the recycle gas is at a sufficiently elevated temperature to vaporize the injected liquid methanol and after each injection the recycle gas/methanol vapor mixture is heat exchanged with hot product gases from the MTG reactor to raise its temperature ready for the next injection of liquid methanol or ready for entry into the MTG catalyst bed. Such a procedure is said to have the advantage that heat exchange with a recycle gas/methanol vapor stream is sufficient to raise that stream to reaction temperature so that separate vaporization and heating of the methanol is not required, resulting in an energy saving. However, that process still appears to suffer from the disadvantage that since methanol is actually injected into the system, failure of the recycle gas could cause virtually pure methanol to be allowed to enter the catalyst bed and cause a temperature excursion.

The present invention seeks to provide a process which decreases the likelihood of recycle gas failure causing a temperature excursion, by arranging for liquid methanol to be vaporized simply by allowing hot recycle gas to flow over the liquid methanol and carry the vapor of evaporated methanol with it to the catalyst bed; in this manner, if the flow of recycle gas ceases, there is little risk of undiluted methanol vapor reaching the catalyst and causing a temperature excursion. Such a procedure has the additional advantages of providing excellent heat transfer between the hot product gases and the methanol and reducing the requirement of high capital expenditure on process plant and equipment.

According to the present invention, there is provided a process for converting methanol into gasoline boiling range hydrocarbons by contacting gaseous methanol with a catalyst comprising a crystalline ZSM-5 type zeolite, comprising:

(a) heating a liquid methanol stream and feeding it to a gas-liquid contact unit at an inlet temperature substantially below the boiling point of the methanol stream under the prevailing process pressure;

(b) contacting the liquid methanol in the contact unit with compressed recycle gas from the system to vaporize methanol and form a methanol-recycle gas stream;

(c) heating the methanol-recycle gas stream and passing it directly to a reactor containing the ZSM-5 type catalyst to convert the methanol into a gasoline hydrocarbon product and a gaseous by-product;

(d) cooling the reactor effluent to condense a liquid hydrocarbon product;

(e) separating gaseous by-product from the liquid hydrocarbon product;

(f) compressing and recycling the gaseous by-product to step (b).

Advantageously, the hot reactor effluent heats the methanol-recycle gas stream by indirect heat exchange and the reactor effluent heats the liquid methanol stream by indirect heat exchange.

Preferably, the gas-liquid contact unit, or saturator unit, operates by countercurrent contact and includes a vertical tower having an upper liquid inlet for the liquid methanol stream above a countercurrent packed bed contact section, a lower gas inlet for recycle gas, an upper gas outlet for the methanol vapor/recycle gas stream and a lower liquid outlet for unvaporized liquid methanol; in such a system, methanol vapor can leave the contact unit only with the recycle gas. Unvaporized methanol from the saturator unit may then be mixed with fresh methanol to constitute a liquid methanol stream having a total mass flow rate from 5 to 20 times greater than that of the fresh methanol. The inlet liquid methanol stream suitably consists essentially of methanol at least 55°C below its boiling point, and the recycle gas suitably comprises light hydrocarbons and possibly some hydrogen. Preferably, the reaction product comprises gasoline boiling range hydrocarbons and the recycle gas comprises at least 50 mole percent methane. The invention is described in greater detail below by way of example only with reference to the accompanying drawings, in which:

Fig. 1 is a flow diagram of the process including a methanol saturator unit;

Fig. 2A is a plot of saturator unit pressure drop against liquid inlet temperature for a typical design;

Fig. 2B is a plot of saturator diameter against liquid inlet temperature; and

Fig. 3 is a flow diagram similar to that of Fig. 1 but incorporating an optional recycle bypass.

The preferred reactant consists essentially of pure methanol or of crude methanol containing a minor amount of water or other non-deleterious components, such as those produced by conventional catalytic methanol synthesis from syngas ($CO+H_2$). However, the reactant feedstock may include the $C_1$ to $C_3$ alkanols or other volatile lower aliphatic oxygenated hydrocarbons such as alkyl ethers capable of being vaporized by recycle gas and converted by ZSM-5 type catalysts. By way of example, the feedstock may be crude synthetic methanol containing about 81 wt% $CH_3OH$ and 17% $H_2O$; such a feedstock is available at a temperature from about ambient to about 70°C and pressure of 15 to 30 bar. The usual system pressure is about 24 bar.

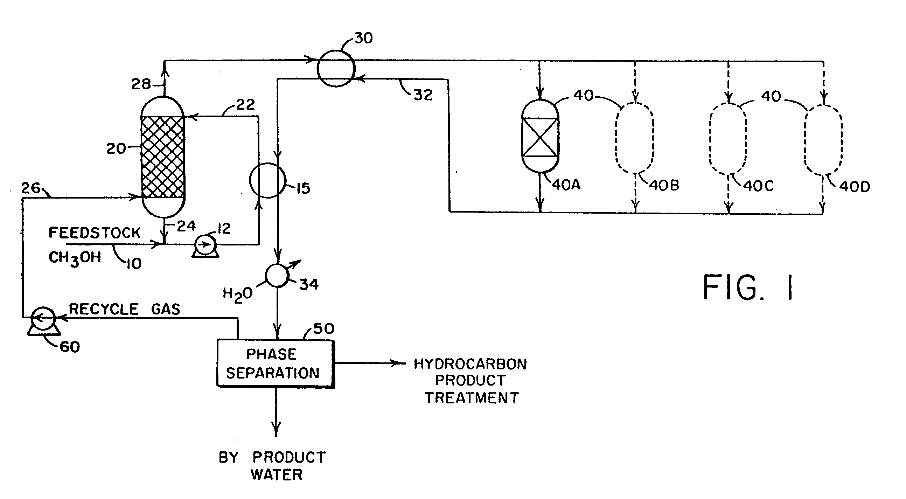

Referring to Figure 1 of the drawings, fresh liquid methanol feedstock is pumped under pressure through a makeup line 10 and circulated by a pump 12 through a heat exchange unit 15 to a saturator unit 20 through an inlet line 22. From ambient temperature, the makeup stream is warmed by mixing with excess unvaporized liquid withdrawn from the saturator 20 through a liquid outlet line 24. After passing through the heat exchange unit 15, the liquid methanol stream is heated to 95° to 165°C and preferably at least 55°C below its autogenous boiling point. The autogenous temperature at process pressure of about 24 bar may permit preheating the methanol feedstream to about 105 to 150°C. Under the preferred process conditions, unvaporized feedstock from the saturator unit is mixed with makeup liquid feedstock to constitute a feedstream having a total mass flow rate about 5 to 20 times greater than that of the makeup liquid. The preferred circulating liquid:makeup ratio is from 5:1 to 10:1.

In the saturator unit, the relatively low partial pressure of methanol in the gaseous phase permits liquid methanol to evaporate at below its autogenous temperature. The liquid phase flows by gravity downwardly through a packed bed, grid plates, contact trays or other suitable means to increase the gas-liquid contact area, with compressed recycle gas flowing upwardly from a gas inlet line 26. The recycle gas may be at a lower temperature than the methanol feedstream, for example at from 50 to 70°C, and is then heated by the hot liquid in the saturator unit and recovered as a saturated stream at about 90 to 100°C through an upper gas outlet line 28. The saturator unit contains about 6 theoretical contact stages.

The methanol-recycle gas mixture which leaves the saturator unit at a temperature of 80° to 140°C is then passed to a heat exchange unit 30, where it recovers a portion of the heat of reaction from reactor effluent stream in line 32. The heated methanol-recycle gas mixture is then contacted directly with the catalyst bed in reactor system 40, which may include multiple parallel fixed bed reactors 40A, 40B, 40C, 40D. Additional heat exchange units, furnaces and/or cooling units may be employed as needed to achieve the necessary thermal conditions for optimum process operation.

The reactor effluent stream in line 32 is cooled in heat exchange units 30 and 15 and with cooling water in cooler 34 to condense by-product water and higher hydrocarbons, including the $C_6^+$ aromatic and aliphatic gasoline-range hydrocarbons. In a phase separation unit 50, the liquid hydrocarbon product stream is recovered for direct use or subsequent treatment. By-product water is also removed as a liquid at this point in the system. The remaining gas stream, which may include $H_2$, $CH_4$ and various amounts of other light gases is separated from the liquid phases. At least a portion of the light gases is recovered and passed through a compressor 60, where the gas is heated adiabatically and returned via line 26 to the saturator unit 20.

The gaseous mixture from the phase separator unit 50 may be fractionated to recover for example $C_3$—$C_4$ (LPG) product and ethane-rich fuel gas. Additional gaseous components, such as hydrogen and nitrogen, may be removed from the system by conventional gas separation methods, including pressure swing adsorption.

Design techniques for a countercurrent saturator tower unit are described by Sze and Campagnolo in *Chemical Engineering Process,* March 1956, pp 121—6M. Design criteria should be chosen to accommodate a wide range of gas to liquid ratios and for changes in stream composition. Little variation would be expected in the crude liquid methanol feedstock; however, the light gas composition of the recycle stream can be changed markedly within the operating parameters of industrial MTG plants. The methanol saturation curves at various operating temperatures and pressures can be determined for design purposes.

The first commercial scale MTG plant has been designed to produce about 2,400 $m^3$ per day of liquid gasoline and LPG product. A suitable saturator tower for such a plant would be able to handle about $8 \times 10^6$ gram moles per hour of crude makeup methanol having a composition set forth in Table I below. Preferably, the mole ratio (approx. gas volume) of recycle gas to methanol is about 5:1 to 15:1, with optimum process conditions usually being achieved at about 9:1 to 13:1. A typical MTG recycle gas composition is shown in Table I. A specific design case with six theoretical contact stages is summarized in Table I.

TABLE I
Composition of the recycle gas, methanol feed, and contact unit liquid outlet

| Material | Recycle gas | | | Methanol feed | | Saturator liquid outlet | |
|---|---|---|---|---|---|---|---|
| | $10^{-3} \times$ Moles/hr | mole % | wt. % | $10^{-3} \times$ Moles/hr | wt. % | $10^{-3} \times$ Moles/hr | wt. % |
| $H_2$ | 7237 | 10.1 | 0.73 | 11.34 | 0.01 | 6.35 | 0.001 |
| $CH_4$ | 33038 | 46.2 | 26.64 | 43.55 | 0.31 | 28.58 | 0.04 |
| CO | 1262 | 1.8 | 1.78 | 1.59 | 0.02 | 1.09 | 0.003 |
| $CO_2$ | 15709 | 21.9 | 34.75 | 63.50 | 1.24 | 13.61 | 0.05 |
| $N_2$ | 437 | 0.6 | 0.62 | 0.82 | 0.01 | 0.36 | 0.001 |
| $C_2H_4$ | 210 | 0.3 | 0.30 | — | 0.00 | 0.18 | 0.0004 |
| $C_2H_6$ | 1735 | 2.4 | 2.62 | — | 0.00 | 1.50 | 0.004 |
| $C_3's$ | 5131 | 7.2 | 11.35 | — | 0.00 | 4.54 | 0.02 |
| $C_4's$ | 4435 | 6.2 | 12.92 | — | 0.00 | 3.63 | 0.02 |
| $C_5's$ | 1482 | 2.1 | 5.35 | — | 0.00 | 1.27 | 0.01 |
| $C_6{}^+$ | 586 | 0.8 | 2.65 | — | 0.00 | 0.18 | 0.003 |
| $CH_3OH$ | — | — | — | 5708. | 81.15 | 19945. | 51.04 |
| $H_2$ | 323 | 0.4 | 0.29 | 2110. | 16.87 | 29965. | 43.12 |
| Other | — | — | — | 14.52 | 0.39 | 962. | 5.69 |
| Totals | 71585 | 100.0 | 100.00 | 7593. | 100.00 | 50933. | 100.00 |

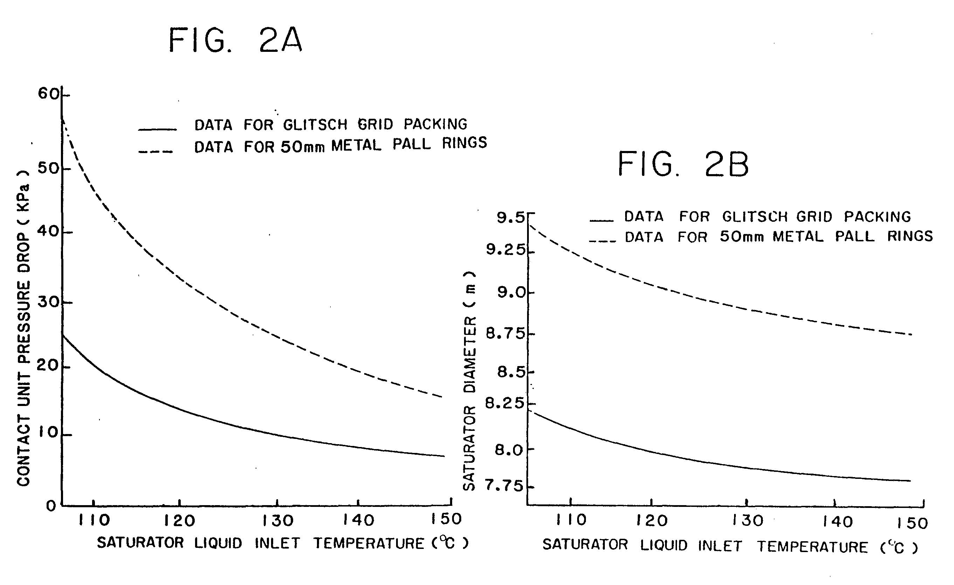

A suitable vertical saturator tower to accommodate the mass flow rates of the above methanol and recycle streams would require a tower diameter of about 8 to 10 meters and a packing height of about 12 meters to achieve six theoretical stages for Glitson Grid packing. The effects of different types of packing are shown in Figs. 2A and 2B. The two packings compared are Glitson Grids and the more conventional 50 mm Pall rings (slotted metal rings). Pressure drops for 6 theoretical stages are shown in Figure 2A (Glitson Grids require about 2 meters of bed height, for a total of 12 meters; Pall rings require about 1 meter of bed height per theoretical stage, for a total of 6 meters). Although a bed filled with Glitsch Grids is twice as tall as one filled with Pall rings, the total pressure drop across the whole tower is less than one half of that when Pall rings are used, and more importantly, the tower diameter is about 0.9 to 1.2 m smaller for the Glitsch Grid packing.

For the Glitsch Grids, the pressure drop through the packing is quite low, from about 7 to 27 kPa depending on the inlet temperature. For the 50 mm Pall rings the pressure drop is twice that for the Glitsch Grid packing, from about 14 to 55 kPa. The reduced tower diameter and pressure drop for the Glitsch Grid definitely favor it for packing material.

Definite heat exchange advantages are obtained using the methanol saturation unit, as compared with vaporizing the makeup feedstock directly. Direct vaporization requires higher input temperatures and thus an auxilliary heat exchange to provide the same amount of thermal energy. The process of the invention permits savings about 30% on heat exchanger area for the overall MTG system, which is reflected in markedly lower construction costs.

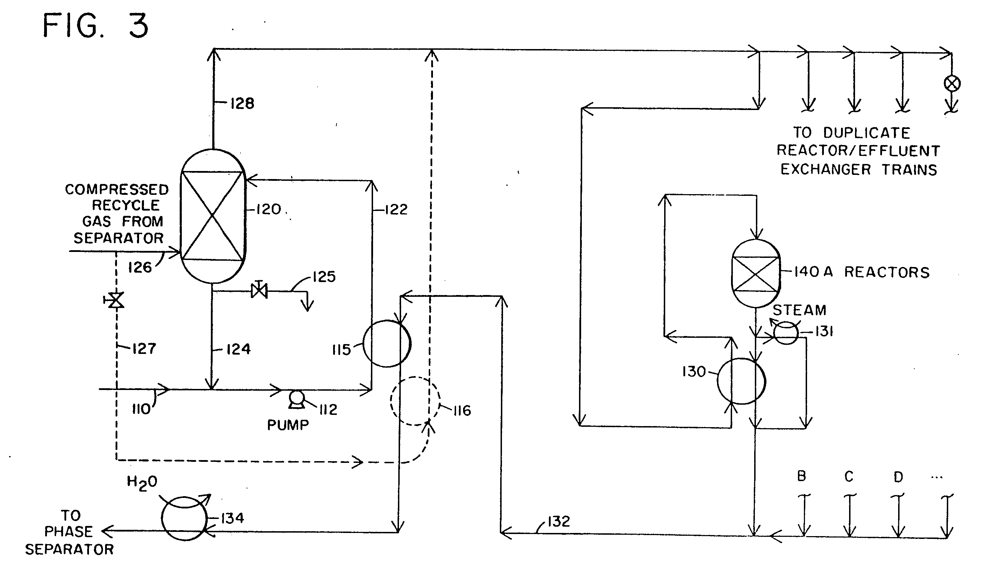

In Fig. 3 a modified MTG system is shown for the more efficient saturator feed vaporization technique. Analogous to Fig. 1, a saturator unit 120 receives the pre-heated methanol feedstream from effluent heat exchange unit 115. Individual reactor heat loops are shown, with the reactant-recycle gas stream in line 128 being heated in heat exchange unit 130 before contact with the catalyst bed in reactors 140A, etc. Partial effluent heat recovery is obtained with steam unit 131.

It may be desired to bypass a minor or major fraction of recycle gas around the satuator unit. The optional design shown in broken lines in Fig. 3 permits up to 75% of the compressed recycle gas to be diverted through bypass line 127, heated in bypass/effluent heat exchange unit 116 and combined with the methanol-recycle gas mixture from saturator outlet line 128. This modification of the system permits a smaller saturator unit to be installed due to decreased gas throughput. Various amounts of non-reactive or non-volatile components in the crude methanol may accumulate in the feedstream being circulated through the saturator unit 120. A blow down line 125 may be used to divert a portion of unvaporized liquid from outlet line 124 for treatment or bleed off.

In the modified system with 75% bypass of recycle gas, where the total mole ratio of recycle gas to methanol is 9:1, the following system conditions apply: recycle gas saturator inlet, 68°C; upper saturator liquid inlet, 135—165°C; upper saturator methanol-recycle outlet, 125—140°C; lower unvaporized liquid outlet, 65—105°C; circulated liquid: methanol feedstock weight ratio, 5:1—20:1.

The present process has the advantage that it permits methanol vapor to be introduced with safety directly to the zeolite catalyst. Prior art systems have included an initial dehydration step over an alumina catalyst to convert a portion of the methanol into dimethyl ether before the zeolite contact step. Elimination of the dehydration reactor also removes an additional pressure drop constraint. The saturator-modified system could be similar in overall loop pressure differential as compared to the standard prior art configuration. The slight pressure drop across the saturator unit can be offset by a simplified fluid handling system with lower valve pressure losses.

By eliminating temperature excursions in the catalytic process, some reduction in equipment costs can be realized due to cheaper materials of fabrication, especially steel vessels.

**Claims**

1. A process for converting methanol into gasoline boiling range hydrocarbons by contacting gaseous methanol with a catalyst comprising a crystalline ZSM-5 type zeolite, comprising:
    (a) heating a liquid methanol stream and feeding it to a gas-liquid contact unit at an inlet temperature substantially below the boiling point of the methanol stream under the prevailing process pressure;
    (b) contacting the liquid methanol in the contact unit with compressed recycle gas from the system to vaporize methanol and form a methanol-recycle gas stream;
    (c) heating the methanol-recycle gas stream and passing it directly to a reactor containing the ZSM-5 type catalyst to convert the methanol into a gasoline hydrocarbon product and a gaseous by-product;
    (d) cooling the reactor effluent to condense a liquid hydrocarbon product;
    (e) separating gaseous by-product from the liquid hydrocarbon product;
    (f) compressing and recycling the gaseous by-product to step (b).

2. A process according to claim 1, wherein substantially the entire gaseous by-product from step (e) is recycled to step (b).

3. A process according to claim 1 or claim 2, wherein the methanol-recycle gas stream is heated in step (c) by indirect heat exchange with the reactor effluent.

4. A process according to any one of claims 1 to 3, wherein the liquid methanol stream is heated in step (a) by indirect heat exchange with the reactor effluent.

5. A process according to any one of claims 1 to 4, wherein the gas-liquid contact unit comprises a vertical column having an upper inlet for the liquid methanol stream above a packed bed contact section, a lower inlet for recycle gas, an upper outlet for methanol vapor/recycle gas and a lower outlet for unvaporized liquid methanol.

6. A process according to any one of claims 1 to 5, wherein the methanol stream is heated in step (a) to 95 to 165°C, the compressed recycle gas enters the contact unit in step (b) at 50 to 70°C, the contact unit contains about 6 theoretical contact stages, and the methanol/recycle gas mixture leaves the contact unit at 80 to 140°C.

7. A process according to any one of claims 1 to 6, wherein unvaporized methanol from the contact unit is recycled to the contact unit with makeup liquid methanol to constitute a liquid methanol stream having a total mass flow rate from 5 to 20 times greater than that of the makeup methanol.

8. A process according to any one of claims 1 to 7, wherein the weight ratio of recycle gas to methanol vapor leaving the contact unit is 5:1 to 15:1.

9. A process according to any one of claims 1 to 8, wherein a portion of the recycle gas from step (e) bypasses the contact unit and is combined with the methanol vapor/recycle gas mixture from the contact unit prior to the latter entering the reactor.

**Patentansprüche**

1. Verfahren zur Umwandlung von Methanol in Kohlenwasserstoffe im Benzinsiedebreich durch Kontakt des gasförmigen Methanols mit einem Katalysator, der einen kristallinen Zeolith vom Typ ZSM-5 umfaßt, welches umfaßt:

(a) Erwärmen des flüssigen Methanolstroms und dessen Zufuhr zu einer Gas/Flüssigkeits-Kontaktanlage bei einer Einlaßtemperatur im wesentlichen unterhalb des Siedepunktes des Methanolstroms bei dem vorherrschenden Verfahrensdruck;

(b) Kontakt des flüssigen Methanols in dieser Kontaktanlage mit komprimiertem Umlaufgas aus dem System, um das Methanol zu verdampfen und einen Methanol-Umlaufgas-Strom zu bilden;

(c) Erwärmen des Methanol-Umlaufgas-Stromes und dessen direkte Leitung zu einem Reaktor, der den Katalysator vom Typ ZSM-5 enthält, um das Methanol in ein Benzin-Kohlenwasserstoffprodukt und ein gasförmiges Nebenprodukt umzuwandeln;

(d) Abkühlen des Reaktorabflußes, um das flüssige Kohlenwasserstoffprodukt zu kondensieren;

(e) Abtrennung des gasförmigen Nebenproduktes vom flüssigen Kohlenwasserstoffprodukt;

(f) Komprimierung und Kreislaufführung des gasförmigen Nebenproduktes zum Schritt (b).

2. Verfahren nach Anspruch 1, worin im wesentlichen das gesamte gasförmige Nebenprodukt vom Schritt (e) zum Schritt (b) rezirkuliert wird.

3. Verfahren nach Anspruch 1 oder 2, worin der Methanol-Umlaufgas-Strom im Schritt (c) durch indirekten Wärmeaustausch mit dem Reaktorabfluß erwärmt wird.

4. Verfahren nach einem der Ansprüche 1 bis 3, worin der flüssige Methanolstrom im Schritt (a) durch indirekten Wärmeaustausch mit dem Reaktorabfluß erwärmt wird.

5. Verfahren nach einem der Ansprüche 1 bis 4, worin die Gas/Flüssigkeits-Kontaktanlage eine senkrechte Kolonne mit einem oberen Einlaß für den flüssigen Methanolstrom oberhalb des Festbett-Kontaktabschnittes, einen unteren Einlaß für das Umlaufgas, einen oberen Auslaß für Methanoldampf/Umlaufgas und einen unteren Auslaß für unverdampftes flüssiges Methanol umfaßt.

6. Verfahren nach einem der Ansprüche 1 bis 5, worin der Methanolstrom im Schritt (a) auf 95 bis 165°C erwärmt wird, das komprimierte Umlaufgas die Kontaktanlage im Schritt (b) bei 50 bis 70°C betritt, die Kontaktanlage etwa 6 theoretische Kontaktstufen enthält und die Methanol/Umlaufgas-Mischung die Kontaktanlage bei 80 bis 140°C verläßt.

7. Verfahren nach einem der Ansprüche 1 bis 6, worin das unverdampfte Methanol aus der Kontaktanlage mit einer flüssigen Methanolauffrischung zur Kontaktanlage zurückgeführt wird, um einen flüssigen Methanolstrom mit einem gesamten Massendurchsatz zu bilden, der von 5 bis 20 mal größer als der der Methanolauffrischung ist.

8. Verfahren nach einem der Ansprüche 1 bis 7, worin das Gewichtsverhältnis des Umlaufgases zum Methanoldampf, die die Kontaktanlage verlassen, 5:1 bis 15:1 beträgt.

9. Verfahren nach einem der Ansprüche 1 bis 8, worin ein Teil des Umlaufgases vom Schritt (e) die Kontaktanlage umgeht und mit der Methanoldampf/Umlaufgas-Mischung aus der Kontaktanlage kombiniert wird, bevor letztere den Reaktor betritt.

**Revendications**

1. Un procédé de conversion de méthanol en hydrocarbures de la coupe des essences par mise en contact de méthanol gazeux avec un catalyseur comprenant une zéolite cristalline du type ZSM-5, comprenant:

(a) le chauffage d'un courant de méthanol liquide et l'introduction de celui-ci dans un contacteur gaz-liquide à une température d'entrée sensiblement inférieure au point d'ébullition du courant de méthanol à la pression régnant dans le procédé;

(b) la mise en contact du méthanol liquide dans le contacteur avec du gaz recyclé comprimé issu du procédé pour vaporiser le méthanol et former un courant méthanol-gaz recyclé;

(c) le chauffage du courant méthanol-gaz recyclé et le passage de celui-ci directement dans un réacteur contenant le catalyseur du type ZSM-5 pour convertir le méthanol en essence et en un sous-produit gazeux;

(d) le refroidissement de l'effluent issu du réacteur pour condenser un produit hydrocarboné liquide;

(e) la séparation du sous-produit gazeux du produit hydrocarboné liquide;

(f) la compression et le recyclage du sous-produit gazeux vers l'étape (b).

2. Un procédé selon la revendication 1, dans lequel sensiblement la totalité du sous-produit gazeux de l'étape (e) est recyclé vers l'étape (b).

3. Un procédé selon la revendication 1 ou 2, dans lequel le courant méthanol-gaz recyclé est chauffé dans l'étape (c) par échange de chaleur indirect avec l'effluent issu du réacteur.

4. Un procédé selon l'une quelconque des revendications 1 à 3, dans lequel le courant de méthanol liquide est chauffé dans l'étape (a) par échange de chaleur indirect avec l'effluent issu du réacteur.

5. Un procédé selon l'une quelconque des revendications 1 à 4, dans lequel le contacteur gaz-liquide comprend une colonne verticale ayant une entrée supérieure pour le courant de méthanol liquide au-dessus d'une section de contact comprenant un lit de garnissage, une entrée inférieure pour le gaz recyclé, une sortie supérieure pour le mélange vapeur de méthanol-gaz recyclé et une sortie inférieure pour le méthanol liquide non vaporisé.

6. Un procédé selon l'une quelconque des revendications 1 à 5, dans lequel le courant de méthanol est chauffé dans l'étape (a) à une température de 95 à 165°C, le gaz recyclé comprimé pénètre dans le contacteur dans l'étape (b) à une température de 50 à 70°C, le contacteur contient environ 6 étages théoriques de contact, et le mélange méthanol/gaz recyclé quitte le contacteur à une température de 80 à 140°C.

7. Un procédé selon l'une quelconque des revendications 1 à 6, dans lequel le méthanol non vaporisé issu du contacteur est recyclé vers le contacteur avec le méthanol liquide d'alimentation pour constituer un courant de méthanol liquide ayant un débit massique total de 5 à 20 fois supérieur à celui du méthanol d'alimentation.

8. Un procédé selon l'une quelconque des revendications 1 à 7, dans lequel le rapport pondéral gaz recycle/vapeur de méthanol dans le contacteur est de 5/1 à 15/1.

9. Un procédé selon l'une quelconque des revendications 1 à 8, dans lequel une partie du gaz recyclé de l'étape (e) est dérivé du contacteur et est combiné avec le mélange vapeur de méthanol/gaz recyclé issu du contacteur avant que ce dernier n'entre dans le réacteur.

FIG. 1

FIG. 2B

— DATA FOR GLITSCH GRID PACKING
--- DATA FOR 50mm METAL PALL RINGS

SATURATOR DIAMETER ( m )

SATURATOR LIQUID INLET TEMPERATURE (°C )

FIG. 2A

— DATA FOR GLITSCH GRID PACKING
--- DATA FOR 50mm METAL PALL RINGS

CONTACT UNIT PRESSURE DROP ( kPa )

SATURATOR LIQUID INLET TEMPERATURE (°C )

FIG. 3

TO DUPLICATE
REACTOR/EFFLUENT
EXCHANGER TRAINS

140 A REACTORS

STEAM

131

130

B C D

132

116

122

115

112 PUMP

125

120

128

124

126

127

110

COMPRESSED
RECYCLE
GAS FROM
SEPARATOR

134

H₂O

TO
PHASE
SEPARATOR

3